# EUROPÄISCHE PATENTSCHRIFT

(11) **EP 3 203 629 B1**
(45) Veröffentlichungstag und Bekanntmachung des Hinweises auf die Patenterteilung: **23.10.2019**
(21) Anmeldenummer: 17152877.1
(22) Anmeldetag: 24.01.2017
(51) Int. Cl.: H02P 27/06

(54) **VERFAHREN ZUM SICHEREN ABSCHALTEN EINES ANTRIEBSSYSTEMS**
METHOD FOR SECURE DEACTIVATION OF A DRIVE SYSTEM
PROCÉDÉ D'ARRÊT SÉCURISÉ D'UN SYSTÈME D'ENTRAÎNEMENT

(30) Priorität: 04.02.2016 DE 102016201735
(43) Veröffentlichungstag der Anmeldung: 09.08.2017
(73) Patentinhaber: Baumüller Nürnberg GmbH, 90482 Nürnberg (DE)
(72) Erfinder: CHANG, Qian, 90473 Nürnberg (DE); PEETZ, Thomas, 90489 Nürnberg (DE)
(74) Vertreter: FDST Patentanwälte

(56) Entgegenhaltungen:
- CA-A1- 2 903 362
- DE-A1- 10 059 331
- DE-A1- 19 747 255
- DE-A1-102014 000 786
- DE-A1-102014 210 648
- US-A1- 2003 089 556

## Beschreibung

Die Erfindung betrifft ein Verfahren zum sicheren Abschalten eines Antriebssystems. Sie betrifft weiter ein nach diesem Verfahren abschaltbares Antriebssystem. Unter dem Begriff "sicher" wird hierbei die Erfüllung einer Sicherheitsfunktion, insbesondere der sogenannten Safe-Torque-Off-Funktion, verstanden.

Im Bereich der Antriebstechnik mit Elektromotoren als elektrische Maschinen, insbesondere mit Synchron- und Asynchronmotoren, sind sicherheitsgerichtete Funktionen gefordert, um Verletzungen infolge von ungewollten oder unerwarteten Drehungen der Antriebe zuverlässig und betriebssicher zu vermeiden. Eine wesentliche Sicherheitsfunktion ist in diesem Zusammenhang ein als Safe-Torque-Off (STO) bezeichneter sicherer Halt des Antriebs, indem dieser sicher von dessen Energieversorgung getrennt wird, um nach Auslösung der Sicherheitsfunktion einen Stopp zu bewirken und seine Ruhelage zuverlässig zu erreichen.

Ein derartiges Antriebssystem umfasst üblicherweise einen an ein Versorgungsnetz angeschlossenen Umrichter, insbesondere einen Frequenzumrichter, mit einem Gleichstromzwischenkreis zur Bereitstellung einer Zwischenkreisspannung für eine Anzahl von Elektromotoren. Die Elektromotoren werden hierbei als Drehstrommotoren mittels gesteuerter Strom- beziehungsweise Wechselrichter an die Zwischenkreisspannung, insbesondere in einer Parallelschaltung, angeschlossen. Die (Motor-)Stromrichter umfassen hierbei typischerweise eine Anzahl von Halbleiterschaltern, die als eine gesteuerte Brückenschaltung die Zwischenkreisspannung beispielsweise in eine dreiphasige Motorspannung umwandeln.

Aus der DE 103 07 999 B4 ist eine Steuereinrichtung für einen selbstgeführten Stromrichter mit einer Sicherheitsfunktion bekannt, bei welchem betriebsmäßig oder im Fehlerfall die Ansteuersignale der Halbleiterschalter der Brückenschaltung sicher abgeschaltet werden. Dadurch kann der Motorstromrichter keinen Drehstrom für den Elektromotor generieren, sodass der Elektromotor zum Stillstand kommt. Auch könnte stromrichterseitig die Versorgungsspannung der Halbleiterschalter abgeschaltet werden.

Bei einem derartigen Antriebssystem ist die Sicherheitsfunktion somit dezentral in den einzelnen Motorstromrichtern integriert. Dadurch sind solche Antriebssysteme mit hohen Herstellungskosten und einem vergleichsweise hohen Montage- beziehungsweise Verdrahtungsaufwand behaftet.

In der DE 100 59 331 A1 ist ein Umrichtersystem mit einem an ein Versorgungsnetz angeschlossenen Frequenzumrichter und mit einem Wechselrichter beschrieben, zwischen denen ein Zwischenkreis ausgebildet ist. In den Zwischenkreis sind Halbleiterschalter zum periodischen Abkoppeln des Zwischenkreises von dem Versorgungsnetz geschaltet.

Die DE 10 2014 000 786 A1 beschreibt ein Antriebssystem mit einem an ein Versorgungsnetz angeschlossenen Gleichrichter und mit einer Anzahl von Elektromotoren, welche mittels jeweils einem zugeordneten Wechselrichter an einen Zwischenkreis angeschlossen sind. Das bekannte Antriebssystem weist weiterhin eine Stromausfallerfassungseinheit auf, wobei im Falle eines Stromausfalls der Zwischenkreis mittels einer elektrischen Speichervorrichtung gespeist wird.

Der Erfindung liegt die Aufgabe zugrunde, ein geeignetes Verfahren zum sicheren Abschalten eines Antriebssystems anzugeben. Insbesondere soll eine zuverlässige und zentral gesteuerte Sicherheitsfunktion ermöglicht sein. Des Weiteren soll ein nach einem derartigen Verfahren sicher abschaltbares Antriebssystem angegeben werden.

Bezüglich des Verfahrens wird die genannte Aufgabe mit den Merkmalen des Anspruchs 1 und bezüglich des Antriebssystems mit den Merkmalen des Anspruchs 2 erfindungsgemäß gelöst. Vorteilhafte Ausgestaltungen und Weiterbildungen sind Gegenstand der jeweiligen Unteransprüche.

Das erfindungsgemäße Verfahren dient einem sicheren Abschalten eines Antriebssystems. Das Antriebssystem umfasst hierbei einen an einem Versorgungsnetz angeschlossenen Umrichter mit einem nachfolgend auch als Zwischenkreis bezeichneten Gleichstromzwischenkreis zur Bereitstellung einer Zwischenkreisspannung für eine Anzahl von Elektromotoren, beispielsweise Synchron- oder Asynchronmotoren. Der Umrichter ist vorzugsweise als ein Frequenzumrichter ausgeführt und weist einerseits einen netzseitigen Gleichrichter zur Einspeisung und Erzeugung der Zwischenkreisspannung sowie eine der Anzahl der Elektromotoren entsprechende Anzahl von motorseitigen Motorstromrichtern zur Wandlung der Zwischenkreisspannung in einen Drehstrom beziehungsweise in eine mehrphasige Motorspannung auf. Insbesondere ist jedem Elektromotor ein Motorstromrichter als Wechselrichter zugeordnet und mittels diesen an den Zwischenkreis angeschlossen.

In den Zwischenkreis ist weiterhin eine Verbindungs- und Trennschaltung geschaltet, die verfahrensgemäß anhand eines Abschaltsignals einer Steuereinheit den Zwischenkreis sicher unterbricht. Durch die Unterbrechung des Zwischenkreises wird die Zwischenkreisspannung abgeschaltet, sodass die angeschlossenen Motorstromrichter keinen Drehstrom für den Elektromotor generieren. Dadurch ist ein zentrales Abschalten der Zwischenkreisspannung - und somit der angeschlossenen Elektromotoren - im Zuge einer Sicherheitsfunktion, insbesondere im Zuge einer vom Abschaltsignal repräsentierten STO-Funktionalität, einfach und kostengünstig ermöglicht.

Die Abschaltung der Elektromotoren erfolgt im Gegensatz zum Stand der Technik nicht dezentral, sondern zentral mittels einer zentral gesteuerten Sicherheitsfunktion, beispielsweise mittels einer als ein Bus-Controller ausgeführten Steuereinheit. Mit anderen Worten erfolgt die Abschaltung der Elektromotoren anhand einer zentral geschalteten Steuereinheit, wodurch ein Montage- und Verdrahtungsaufwand des Antriebssystems verringert wird. Dies überträgt sich weiterhin vorteilhaft auf die Herstellungskosten eines derartigen Antriebssystems.

Das erfindungsgemäße Antriebssystem weist hierzu zweckmäßigerweise eine im Zwischenkreis verschaltete Verbindungs- und Trennschaltung auf, die mit der Steuereinheit signaltechnisch verbunden sowie dazu geeignet und eingerichtet ist, den Zwischenkreis in Abhängigkeit des Abschaltsignals sicher zu unterbrechen.

Die Motorstromrichter weisen jeweils eine Wechselrichterschaltung, insbesondere eine durch eine Motorregelung beziehungsweise Motorsteuerung gesteuerte Brückenschaltung zur Wandlung der Zwischenkreisspannung in die Motorspannung auf. Die Brückenschaltung umfasst vorzugsweise eine Anzahl von Halbleiterschaltern, insbesondere Bipolartransistoren mit isolierter Gate-Elektrode (IGBT), die mittels eines pulsweitenmodulierten Ansteuersignals der Motorsteuerung angesteuert werden. Im Gegensatz zum Stand der Technik wird im Zuge der Sicherheitsfunktion nicht die Versorgungsspannung oder das Ansteuersignal der motorstromrichterinternen Halbleiterschalter unterbrochen, sondern der davor geschaltete Zwischenkreis. Dadurch generieren die Wechselrichterschaltungen keine Drehströme für den jeweiligen Elektromotor.

Der Zwischenkreis weist funktionsgemäß einen Pluspfad und einen Minuspfad auf, die entsprechend an den Plus- beziehungsweise Minuspol des netzseitigen Gleichrichters kontaktiert sind. Die Elektromotoren beziehungsweise deren zugeordnete Motorstromrichter sind hierzu in einer Parallelschaltung zwischen den Pluspfad und dem Minuspfad verschaltet, und somit mit der Zwischenkreisspannung versorgt.

Die Steuereinheit ist beispielsweise als ein Bus-Controller für eine zentrale Antriebsregelung der Elektromotoren ausgeführt, und als solcher bestimmungsgemäß mittels einer Busleitung mit den Motorsteuerungen der Motorstromrichter signaltechnisch kontaktiert. Geeigneterweise ist die Steuereinheit ebenfalls zum Auslösen eines Schutzschalters eingerichtet, der vorzugsweise vor dem Gleichrichter in dem Versorgungsnetz verschaltet ist. Dadurch ist im Bedarfs- oder Fehlerfall das gesamte Antriebssystem sicher vom Versorgungsnetz trennbar.

Die Steuereinheit ist allgemein - programm- und/oder schaltungstechnisch - zur Durchführung des vorstehend beschriebenen erfindungsgemäßen Verfahrens eingerichtet. Die Steuereinheit ist somit konkret dazu eingerichtet, Schaltelemente der Verbindungs- und Trennungsschaltung zu steuern, das heißt in Abhängigkeit des Abschaltsignals zu Öffnen oder zu Schließen. Das Abschaltsignal wird hierbei beispielsweise durch eine der mittels der Busleitung gekoppelten Motorsteuerungen ausgelöst, die mittels eines motorseitigen Sensors einen Fehlerfall detektiert, oder durch einen externen, manuell betätigbaren Not-Aus-Schalter. Das Abschaltsignal wird vorzugsweise in Folge einer Auslösung oder Aktivierung einer Sicherheitsfunktion, insbesondere der STO-Funktion, ausgelöst.

Die Steuereinheit ist zumindest im Kern durch einen Mikrocontroller mit einem Prozessor und einem Datenspeicher gebildet, in dem die Funktionalität zur Durchführung des erfindungsgemäßen Verfahrens in Form einer Betriebssoftware (Firmware) programmtechnisch implementiert ist, so dass das Verfahren - gegebenenfalls in Interaktion mit einem Benutzer - bei Ausführung der Betriebssoftware in dem Mikrocontroller automatisch durchgeführt wird.

Die Steuereinheit ist in einer möglichen Ausführungsform im Rahmen der Erfindung alternativ aber auch durch programmierbare elektronische Bauteile, zum Beispiel einem anwendungsspezifischen integrierten Schaltkreis (ASIC) gebildet, in dem die Funktionalität zur Durchführung des erfindungsgemäßen Verfahrens mit schaltungstechnischen Mitteln implementiert ist. Insbesondere ist es in einer derartigen Ausführungsform beispielsweise denkbar, dass die Steuereinheit und die Verbindungs- und Trennschaltung als ein gemeinsamer ASIC ausgeführt sind.

Verfahrensgemäß ist vorgesehen, dass der Zwischenkreis zweikanalig getrennt wird. Mit anderen Worten sind zwei schaltbare Abschaltkanäle der Steuereinheit in dem Zwischenkreis, insbesondere im Zuge der Verbindungs- und Trennschaltung, verschaltet. Erfindungsgemäß ist hierbei jedem Abschaltkanal mindestens ein auslösbarer Halbleiterschalter der Verbindungs- und Trennschaltung zur Unterbrechung des Zwischenkreises, das heißt zur Abschaltung der Zwischenkreisspannung zugeordnet. Dadurch ist eine redundante Unterbrechung realisiert. Dies bedeutet, dass selbst in einem Fehlerfall eines der Abschaltkanäle, beziehungsweise einer der zugeordneten Halbleiterschalter, eine betriebssichere Abschaltung des Antriebssystems sichergestellt ist.

Die zwei separaten Abschaltkanäle sind beispielsweise gemeinsam im Pluspfad oder im Minuspfad des Zwischenkreises seriell verschaltet. Alternativ ist es ebenso denkbar, dass jeweils ein Abschaltkanal im Pluspfad und ein Abschaltkanal im Minuspfad vorgesehen sind.

Mittels der Steuereinheit wird mindestens ein steuerbarer erster Halbleiterschalter im Pluspfad und/oder im Minuspfad des Zwischenkreises infolge des Abschaltsignals abgeschaltet. Dadurch ist eine besonders einfach zu regelnde sowie kostengünstige Unterbrechung des Zwischenkreises ermöglicht.

Zur Überwachung der Abschaltung ist hierbei vorzugsweise vorgesehen, dass jeder Antrieb beziehungsweise jede Motorsteuerung seine jeweils anliegende Zwischenkreisspannung erfasst. Die erfassten Spannungswerte werden mittels der Busleitung an die Steuereinheit versendet. Die Steuereinheit ist dazu geeignet und eingerichtet, die empfangenen Spannungswerte dahingehend auszuwerten und zu prüfen, ob die Abschaltung beziehungsweise Unterbrechung des Zwischenkreises erfolgreich war. Im Fehlerfall, das bedeutet, dass die Unterbrechung nicht erfolgreich war, löst die Steuereinheit den im Versorgungsnetz verschalteten Schutzschalter aus, sodass das Antriebssystem sicher von der Einspeisung getrennt wird.

Ist jeweils ein Halbleiterschalter im Pluspfad und im Minuspfad verschaltet, ist es durch die Erfassung der Zwischenkreisspannung möglich zu überprüfen, ob einer der Halbleiterschalter nicht geöffnet hat. Da eine der Anzahl der angeschlossenen Elektromotoren entsprechende Anzahl von Spannungswerten an die Steuereinheit übermittelt werden, ist eine Fehlmessung im Wesentlichen ausgeschlossen.

Geeigneterweise ist jedem Antrieb beziehungsweise jeder Motorsteuerung eine Antriebsnummer zugeordnet, die mit dem jeweiligen Spannungswert übermittelt wird. Dadurch wird sicherheitseinheitsseitig sichergestellt, dass die Spannungswerte von unterschiedlichen Motorsteuerungen versendet wurden. Zweckmäßigerweise weist die Steuereinheit eine Zählvorrichtung auf, die einen der Anzahl der Spannungswerte proportionalen Wert erfasst und während des Betriebs kontinuierlich überwacht. Verändert sich dieser Wert nicht, so wird erkannt, dass zu einem Antrieb keine Verbindung besteht und das Abschaltsignal wird ausgelöst.

In einer möglichen Ausbildungsform ist zusätzlich oder alternativ zum zweiten Halbleiterschalter mindestens ein Schaltelement der Verbindungs- und Trennschaltung als ein Schutzschalter vorgesehen. Der mindestens eine Schutzschalter ist im Pluspfad und/oder im Minuspfad angeordnet, insbesondere in einer Reihenschaltung mit dem ersten Halbleiterschalter. Dadurch ist eine elektromechanische und galvanische Trennung des Zwischenkreises ermöglicht. Der Schutzschalter ist beispielsweise als ein elektronischer, mechanischer oder mechatronischer Schalter oder als ein Relais ausgeführt.

Vorzugsweise wird hierbei im Zuge einer Unterbrechung des Zwischenkreises zunächst der erste Halbleiterschalter geschaltet und anschließend der Schutzschalter. Beim Verbinden des Zwischenkreises wird zunächst der Schutzschalter und erst anschließend der erste Halbleiterschalter geschlossen. Durch diese Schaltfolge schaltet der Schutzschalter stets stromlos, was sich vorteilhaft auf die Lebensdauer der Schaltkontakte überträgt. Der Schutzschalter weist einen zwangsgeführten Rückmeldekontakt auf, der mit der Steuereinheit signaltechnisch gekoppelt ist. Dadurch erkennt die Steuereinheit, ob sicher abgeschaltet wurde. Durch den Schutzschalter innerhalb des Zwischenkreises ist kein weiterer Schutzschalter im Versorgungsnetz notwendig.

In einer zweckmäßigen Ausgestaltung weist die Verbindungs- und Trennschaltung einen Verbindungspfad auf, insbesondere zwischen dem Pluspfad und dem Minuspfad des Zwischenkreises. In den Verbindungspfad sind ein Entladewiderstand sowie ein hierzu in Reihe geschalteter dritter Halbleiterschalter, beispielsweise in Form eines Transistors, verschaltet. Im normalen Betrieb des Antriebssystems ist der dritte Halbleiterschalter im Verbindungspfad geöffnet, wodurch der Entladewiderstand effektiv aus der Verbindungs- und Trennschaltung gelöst ist. Im Zuge eines Abschaltvorgangs, bei welchem der Zwischenkreis unterbrochen wird, wird der dritte Halbleiterschalter geschlossen, sodass der Pluspfad und der Minuspfad durch den Verbindungspfad verbunden sind. Dadurch fließt ein Gleichstrom durch den Entladewiderstand, der die Zwischenkreiskondensatoren der Motorstromrichter entlädt und somit die Zwischenkreisspannung reduziert. Durch den integrierten Entladewiderstand ist somit eine geringe Reaktionszeit der STO-Funktion sichergestellt.

Die Verbindungs- und Trennschaltung weist mindestens eine mit der Steuereinheit gekoppelte Auswerteschaltung auf. Die Auswerteschaltung dient zusätzlich oder alternativ zu den Motorsteuerungen zu einer Erfassung eines Spannungswerts im Zwischenkreis. Der von der Auswerteschaltung erfasste Spannungswert wird mit einer Referenzspannung verglichen, wobei in Abhängigkeit des Vergleichs ein das Abschaltsignal auslösendes Ausgangs- oder Steuersignal an die Steuereinheit versendet wird.

Eine derartige Auswerteschaltung ist jeweils dem ersten und dem zweiten Halbleiterschalter zugeordnet. Das bedeutet, dass vorzugsweise jeweils eine Auswerteschaltung zur Überwachung des Schaltzustandes des jeweiligen Halbleiterschalters vorgesehen ist. Hierzu ist die jeweilige Auswerteschaltung vor und hinter dem entsprechenden Halbleiterschalter in den Pluspfad beziehungsweise in den Minuspfad verschaltet. Die Auswerteschaltung ist hierbei jeweils zwischen einem netzseitigen und einem motorseitigen Anschluss des jeweiligen Halbleiterschalters, das bedeutet insbesondere jeweils kollektor- und emitterseitig, in den Zwischenkreis verschaltet. Mit anderen Worten erfasst die erste Auswerteschaltung ein Spannungssignal am ersten Halbleiterschalter, und die zweite Auswerteschaltung erfasst ein Spannungssignal am zweiten Halbleiterschalter. In einer möglichen Ausführungsform sind die Auswerteschaltungen und der jeweilige Halbleiterschalter als ein gemeinsames elektronisches Bauteil ausgeführt.

Durch die Erfassung der Spannung an den Halbleiterschaltern wird eine sichere Erkennung der Abschaltung beziehungsweise des Schaltzustands der Verbindungs- und Trennschaltung ermöglicht. Ist der erfasste Spannungswert zum Beispiel geringer als die Referenzspannung, so gilt der der zugeordnete Halbleiterschalter als geschlossen, und ein entsprechendes Ausgangssignal wird an die Steuereinheit versendet. Die Referenzspannung wird beispielsweise an einem Spannungsteiler abgegriffen.

In einer zweckmäßigen Weiterbildung weisen die Auswerteschaltungen jeweils durch Schutzimpendanzwiderstände gebildete Widerstandsketten zur Erfassung des jeweiligen Spannungswerts auf. Unter einer Widerstandskette ist hierbei insbesondere eine Reihenschaltung von Schutzimpendanzwiderständen zu verstehen. Die Erfassung des Spannungswerts erfolgt beispielsweise mittels eines Operationsverstärkers (OP), wobei hierzu geeigneterweise eine erste Widerstandskette zwischen dem netzseitigen Anschluss des Halbleiterschalters und dem ersten Eingang des OP's und eine zweite Widerstandskette zwischen dem motorseitigen Anschluss des Halbleiterschalters und dem zweiten Eingang des OP's verschaltet ist. Der Ausgang des OP's wird anschließend mittels eines Komparators mit der Referenzspannung verglichen.

In einer möglichen Weiterbildungsform weist jede Auswerteschaltung hierbei zwei solcher Schaltungen auf, die seriell direkt hintereinander im Zwischenkreis geschaltet sind, wobei das Signal des zweiten Komparators zum Beispiel mittels eines Invertierers invertiert wird. Mit anderen Worten liefert die zweite Schaltung im Normalbetrieb stets das invertierte Signal der ersten Schaltung. Das bedeutet, dass jede Auswerteschaltung zwei Ausgangssignale für die Steuereinheit generiert. Durch die Bewertung der beiden Ausgangssignalpaare ist die Steuereinheit dazu geeignet und eingerichtet, den Schaltzustand der Verbindungs- und Trennschaltung sicher und zuverlässig zu erkennen.

In einer zweckmäßigen Ausbildung sind die Schutzimpendanzwiderstände der Widerstandsketten insbesondere als Metal-Electrode-Leadless-Faces-(MELF-)Widerstände ausgeführt. MELF-Widerstände sind im Fehlerfall stets hochohmig, sodass im Falle eines Kurzschlusses innerhalb der Widerstandskette sichergestellt ist, dass die Steuereinheit den Fehler mittels der Auswerteschaltung zuverlässig erkennt.

In einer denkbaren Ausgestaltung ist die Verbindungs- und Trennschaltung in einem Gehäuse des netzseitigen Gleichrichters integriert. Mit anderen Worten ist die Sicherheitsfunktion in der Einspeisung des Zwischenkreises integriert. Alternativ ist die Verbindungs- und Trennschaltung beispielsweise mit der Steuereinheit zusammen in einem separaten Gehäuse angeordnet, das in dem Zwischenkreis verschaltbar ist.

Nachfolgend werden Ausführungsbeispiele der Erfindung anhand einer Zeichnung näher erläutert. Darin zeigen in schematischen Blockschaltbild-Darstellungen:
- Fig. 1: ein Antriebssystem mit einem Umrichter mit einem Gleichstromzwischenkreis und mit einer Anzahl von Elektromotoren sowie mit einer Verbindungs- und Trennschaltung,
- Fig. 2: eine Ausführungsform der Verbindungs- und Trennschaltung mit einem Verbindungspfad,
- Fig. 3: eine zweite Ausführungsform der Verbindungs- und Trennschaltung,
- Fig. 4: eine Ausführungsform der Verbindungs- und Trennschaltung mit zwei Auswerteschaltungen, und
- Fig. 5: die Auswerteschaltungen.

Einander entsprechende Teile und Größen sind in allen Figuren stets mit den gleichen Bezugszeichen versehen.

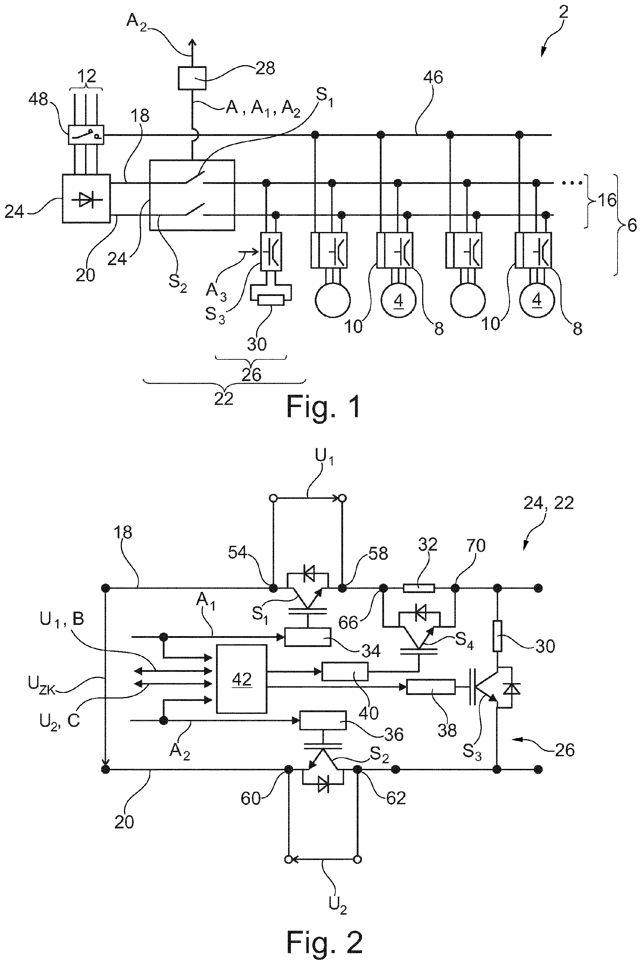

Die Fig. 1 zeigt in schematischer Darstellung ein Antriebssystem 2 mit einer Anzahl an Elektromotoren 4, welche mittels jeweils eines Umrichters 6 betrieben sind. Beispielhaft sind in der Fig. 1 vier Elektromotoren 4 dargestellt, wobei zwei der Elektromotoren 4 beispielhaft mit Bezugszeichen versehen sind. Die Elektromotoren 4 sind als drehstrombetriebene Synchron- oder Asynchronmotoren ausgeführt und weisen als solche jeweils einen zugeordneten Motorstromrichter 8 sowie eine diesen steuernde Motorsteuerung 10 auf.

Die Umrichter 6 sind jeweils als ein Frequenzumrichter an ein dreiphasiges Versorgungsnetz 12 angeschlossen. Hierzu umfasst der jeweilige Umrichter 6 einen netzseitigen Gleichrichter 14 als Einspeiseeinheit und die Motorsteuerung 10 sowie die insbesondere als Wechselrichter ausgeführten motorseitigen Motorstromrichter 8. Zwischen dem Gleichrichter 14 und den Motorstromrichtern 8 ist ein Gleichstromzwischenkreis 16 gebildet, welcher nachfolgend verkürzt auch als Zwischenkreis 16 bezeichnet wird. Der Zwischenkreis 16 weist funktionsgemäß einen Pluspfad 18, der an den Pluspol des Gleichrichters 14 kontaktiert ist, sowie einen Minuspfad 20 auf, der entsprechend an den Minuspol des Gleichrichters 14 kontaktiert ist.

Zwischen dem Pluspol und dem Minuspol des Gleichrichters 14 liegt im Betrieb des Antriebssystems 2 eine Zwischenkreisspannung U_{ZK} als Versorgungsspannung für die angeschlossenen Elektromotoren 4 an. Die Elektromotoren 4 sind jeweils mittels ihres Motorstromrichters 8 zwischen dem Pluspfad 18 und dem Minuspfad 20 an den Zwischenkreis 16 kontaktiert, wobei die Elektromotoren 4 somit insbesondere in einer Parallelschaltung zueinander an den Zwischenkreis 16 gekoppelt sind. Die Motorstromrichter 8 weisen jeweils eine Brückenschaltung zur Wandlung der Gleichspannung U_{ZK} in einen dreiphasigen Drehstrom zum Betrieb des jeweiligen Elektromotors 4 auf.

Direkt hinter dem Gleichrichter 14 ist eine Verbindungs- und Trennschaltung 22 der Umrichter 6 in den Zwischenkreis 16 verschaltet. Mit anderen Worten weist jeder angeschlossene Elektromotor 4 einen Umrichter 6 umfassend den Gleichrichter 14, die Verbindungs- und Trennschaltung 22 sowie jeweils einen zugeordneten Motorstromrichter 8 mit Motorsteuerung 10 auf. Die Verbindungs- und Trennschaltung 22 umfasst in dem in Fig. 1 dargestellten Ausführungsbeispiel insbesondere eine Schaltungsanordnung 24 zur sicheren Unterbrechung des Zwischenkreises 16, sowie einen Verbindungspfad 26. Die Schaltungsanordnung 24 ist signaltechnisch mit einer Steuereinheit 28 gekoppelt, und dazu geeignet und eingerichtet in Abhängigkeit eines Abschaltsignals A der Steuereinheit 28 den Zwischenkreis 16 derart zu Unterbrechen, dass die angeschlossenen Elektromotoren 4 sicher abgeschaltet werden. Unter dem Begriff "sicher" ist in diesem Zusammenhang insbesondere die Erfüllung einer Sicherheitsfunktion, insbesondere der Safe-Torque-Off-Funktion, zu verstehen. Vorzugsweise sind hierbei die Verbindungs- und Trennschaltung 22 sowie die Steuereinheit 28 in einem Gehäuse des Gleichrichters 14 integriert.

Die Schaltungsanordnung 24 ist schaltungstechnisch mit einer redundanten Abschaltung zur Unterbrechung des Zwischenkreises 16 ausgeführt. Das bedeutet, dass zur Abschaltung beziehungsweise Unterbrechung des Zwischenkreises 16 insgesamt zwei Abschaltkanäle vorgesehen sind, die jeweils mit einem betätigbaren Schaltelement S₁ und S₂ versehen sind. In den Ausführungsbeispielen der Figuren 1, 2 und 4 ist das Schaltelement S₁ im Pluspfad 18 und das Schaltelemente S₂ im Minuspfad 20 verschaltet.

Die Steuereinheit 28 ist vorzugsweise schaltungs- und/oder programmtechnisch dazu vorgesehen und eingerichtet, die Funktionsfähigkeit und/oder Funktionssicherheit der Verbindungs- und Trennschaltung 22 beziehungsweise deren Schaltungsanordnung 24 zu überprüfen.

Der Verbindungspfad 26 umfasst einen Entladewiderstand 30 sowie ein hierzu in Reihe geschaltetes Schaltelement S₃, beispielsweise in Form eines Transistors. Im normalen Betrieb des Antriebssystems 2 ist das Schaltelement S₃ des Verbindungspfads 26 geöffnet, sodass kein elektrischer Strom über den Entladewiderstand 30 fließt.

Im Pluspfad 18 ist zwischen dem Schaltelement S₁ und dem Anschluss des Verbindungspfads 26 ein Ladewiderstand 32 mit einem hierzu parallel geschalteten Schaltelement S₄ verschaltet. Die Motorstromrichter 8 weisen nicht näher dargestellte (Zwischenkreis-)Kondensatoren auf, die über den Ladewiderstand 32 bei einem Anlaufen des Antriebssystems 2 aufgeladen werden. Während eines solchen Aufladevorgangs ist das Schaltelement S₄ vorzugsweise geöffnet, sodass der Versorgungs- oder Betriebsstrom lediglich über den Ladewiderstand 32 fließt. Im Normalbetrieb ist das Schaltelement S₄ geschlossen, sodass eine niederohmige Verbindung zwischen dem Gleichrichter 14 und den angeschlossenen Elektromotoren 4 realisiert ist.

Im Zuge eines sicheren Abschaltvorgangs, bei welchem der Zwischenkreis 16 durch die Schaltungsanordnung 24 unterbrochen wird, wird das Schaltelement S₃ geschlossen, sodass der Pluspfad 18 und der Minuspfad 20 über den Verbindungspfad 26 miteinander verbunden sind. Dadurch fließt ein Gleichstrom durch den Entladewiderstand 30, der somit Zwischenkreiskondensatoren der Motorstromrichter 8 entlädt. Durch die Entladung wird die Zwischenkreisspannung U_{ZK} reduziert, sodass die Elektromotoren 4 sicher zum Stillstand gebracht werden.

In dem in Fig. 2 dargestellten Ausführungsbeispiel sind die Schaltelemente S₁, S₂, S₃ und S₄ als Halbleiterschalter, insbesondere als Transistoren mit parallel geschalteten Freilaufdioden ausgeführt.

Die Schaltungsanordnung 24 umfasst vier Treiber 34, 36, 38 und 40, die im Betrieb jeweils ein getaktetes Signal zur Ansteuerung der Halbleiterschalter S₁, S₂, S₃ und S₄ generieren. Durch die Taktung ist es möglich für die Ansteuersignale der Halbleiterschalter S₁, S₂, S₃ und S₄ eine Potentialtrennung mittels eines Transformators zu realisieren. Die Treiber 34, 36, 38 und 40 werden von einem mit der Steuereinheit 28 signaltechnisch gekoppelten Mikrocontroller oder programmierbaren Logik 42 angesteuert. Zur Unterbrechung des Zwischenkreislaufs 16 versendet die Steuereinheit 28 ein Abschaltsignal A₁ zum Öffnen des Halbleiterschalters S₁ und ein Abschaltsignal A₂ zum Öffnen des Halbleiterschalters S₂. Alternativ ist es aber ebenso denkbar, dass durch eine Verwendung geeigneter Ausgänge der Steuereinheit 28 die Abschaltsignale A₁ und A₂ derart zusammengeschaltet werden, sodass lediglich ein Abschaltsignal A zwischen der Steuereinheit 28 und der Schaltungsanordnung 24 versendet wird. An und insbesondere innerhalb der Schaltungsanordnung 24 ist das Abschaltsignal A jedoch vorzugsweise wieder in die Abschaltsignale A₁ und A₂ geteilt.

Bei einem Empfang des Abschaltsignales A₁ beziehungsweise A₂ schaltet die der Treiber 34 beziehungsweise 36 ab, sodass im Zuge einer Impulssperre keine Ansteuersignale für die Halbleiterschalter S₁ und S₂ generiert werden. Gleichzeitig wird der Treiber 38 durch ein Schaltsignal A₃ angeschaltet, sodass der Halbleiterschalter S₃ insbesondere getaktet geschlossen wird, und sich die Zwischenkreisspannung U_{ZK} mittels des Entladewiderstands 30 über den Verbindungspfad 26 entlädt.

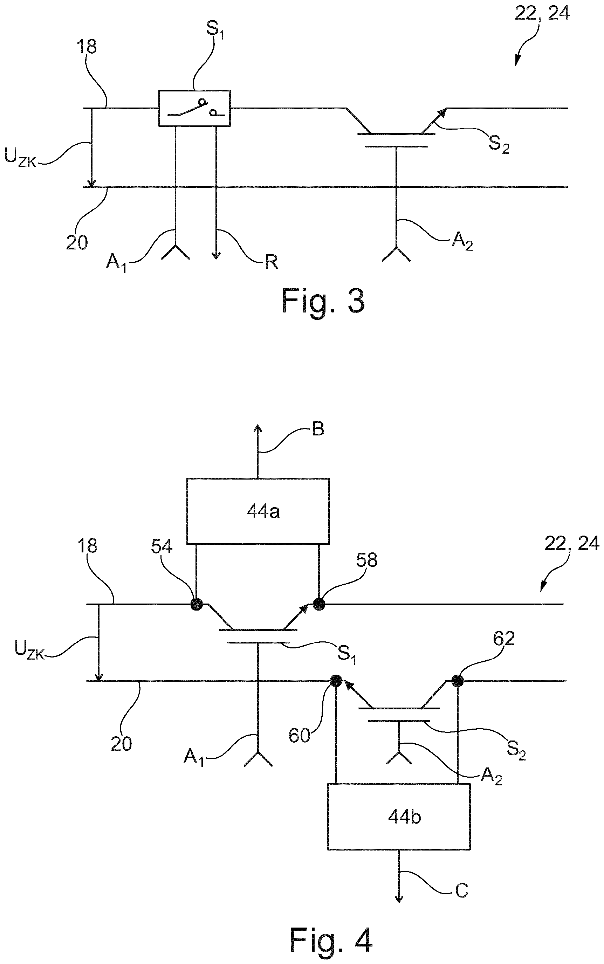

Zur Überprüfung der Schaltzustände ist den Schaltelementen S₁ und S₂ - wie insbesondere in der Fig. 4 ersichtlich - jeweils eine Auswerteschaltung 44a, 44b parallel geschaltet. Die Auswerteschaltungen 44a und 44b erfassen ein Spannungssignal U₁ beziehungsweise U₂ zwischen den jeweiligen kollektor- und emitterseitigen Anschlüssen der Halbleiterschalter S₁ und S₂. Die Auswerteschaltungen 44a und 44b versenden in Abhängigkeit der erfassten Spannungssignale U₁ und U₂ jeweils ein Auswertesignal B beziehungsweise C an die Logik 42 und/oder die Steuereinheit 28.

Die Motorsteuerungen 10 der Motorstromrichter 8 sind an eine gemeinsame Busleitung 46 signaltechnisch kontaktiert. Ein als Schütz ausgeführter Schutzschalter 48 ist vor dem Gleichrichter 14 in das Versorgungsnetz 12 verschaltet, und ist im Bedarfs- oder Fehlerfall durch die Steuereinheit 28 auslösbar. Bei einer Auslösung des Schutzschalters 48 wird der Umrichter 6, und somit das Antriebssystem 2, von dem Versorgungsnetz 12 galvanisch getrennt.

Die Steuereinheit 28 ist programm- und/oder schaltungstechnisch dazu eingerichtet die Schaltungsanordnung 24 der Verbindungs- und Trennungsschaltung 22 zu steuern. Das Abschaltsignal A, beziehungsweise das jeweilige (Einzel-) Abschaltsignal A₁, A₂ der entsprechenden Schaltelemente S₁ und S₂ wird insbesondere in Folge einer Auslösung oder Aktivierung einer Sicherheitsfunktion, insbesondere der STO-Funktion ausgelöst. Durch die dadurch bewirkte Unterbrechung des Zwischenkreises 16 wird die Zwischenkreisspannung U_{ZK} abgeschaltet und entladen, sodass die angeschlossenen Motorstromrichter 8 keinen Drehstrom für den Elektromotor 4 generieren und ein sofortiger Stopp der Elektromotoren 4 bewirkt wird.

Das in der Fig. 3 dargestellte Ausführungsbeispiel zeigt eine elektromechanische Ausgestaltung der zweikanaligen Unterbrechung. In diesem Ausführungsbeispiel ist die zweikanalige Unterbrechung der Schaltungsanordnung 24 durch die in Reihe geschalteten Schaltelemente S₁ und S₂ innerhalb des Pluspfades 18 realisiert.

Das Schaltelement S₁ ist in dieser Ausgestaltung als ein elektronisch betätigbarer Schutzschalter und das Schaltelement S₂ als ein Halbeleiterschalter, insbesondere als ein IGBT, ausgeführt. Durch den Schutzschalter S₁ ist eine galvanische Trennung des Zwischenkreises 16 ermöglicht. Im Zuge einer Unterbrechung des Zwischenkreises 16 wird zunächst der Halbeleiterschalter S₂ durch das Abschaltsignal A₂ direktabgeschaltet, und anschließend der Schutzschalter S₁ durch das Abschaltsignal A₁ betätigt. Beim Verbinden des Zwischenkreises 16 wird zunächst der Schutzschalter S₁ geschlossen und anschließend der Halbeleiterschalter S₂. Der Schutzschalter S₁ weist einen zwangsgeführten Rückmeldekontakt auf, mittels dem ein Rückmeldesignal R zur Übermittlung des Schaltzustandes an die Steuereinheit 28 versendet wird.

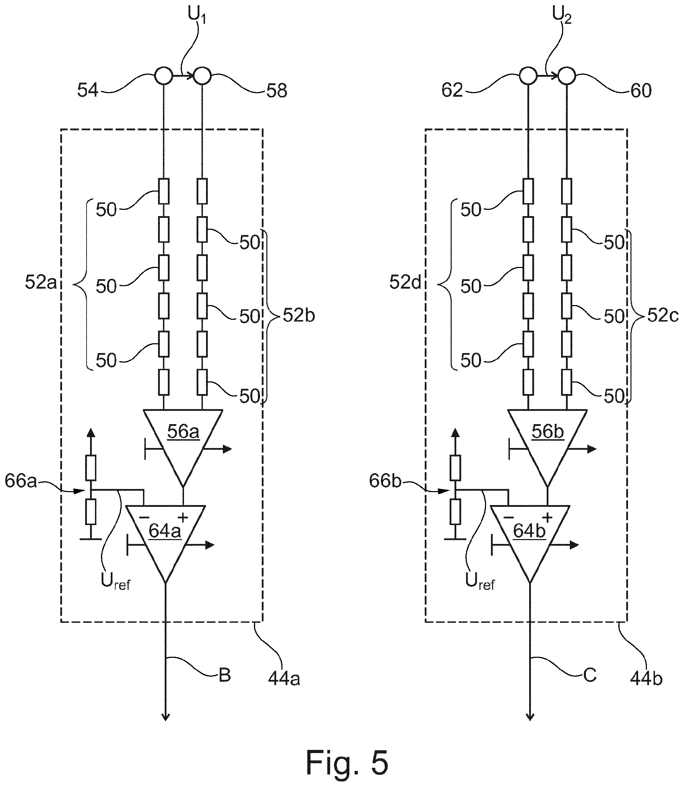

In der Fig. 4 ist eine zweikanalige Abschaltung mittels zweier Halbleiterschalter S₁ und S₂ dargestellt, wobei die Halbleiterschalter S₁ und S₂ wie in der Fig. 1 und in der Fig. 2 im Pluspfad 18 einerseits und im Minuspfad 20 andererseits verschaltet sind. In dieser Ausgestaltung erfolgt die Unterbrechung des Zwischenkreises 16 rein elektronisch, wobei die Verbindungs- und Trennschaltung 22 in dem Ausführungsbeispiel der Fig. 4 zusätzlich die zwei Auswerteschaltungen 44a und 44b darstellt, deren Aufbau anhand der Fig. 5 nachfolgend näher erläutert wird.

Die in Fig. 5 näher dargestellten Auswerteschaltungen 44a und 44b erfassen im Betrieb den Schaltzustand des jeweils zugeordneten Halbleiterschalters S₁ beziehungsweise S₂. Hierzu weisen die Auswerteschaltungen 44a und 44b jeweils zwei durch Schutzimpendanzwiderstände 50 gebildete Widerstandsketten 52a, 52b, 52c, 52d auf. Die insbesondere als MELF-Widerstände ausgeführten Schutzimpedanzwiderstände 50 sind in Fig. 5 lediglich beispielhaft mit Bezugszeichen versehen. Obwohl die Schutzimpendanzwiderstände 50 mit gleichen Bezugszeichen versehen sind, können die einzelnen Schutzimpendanzwiderstände 50 voneinander unterschiedliche elektrische Widerstandswerte aufweisen. Vorzugsweise weisen jedoch die dadurch gebildeten Widerstandsketten 52a, 52b, 52c, 52d jeweils den gleichen Gesamtwiderstand auf.

Die Widerstandskette 52a ist zwischen einem netzseitigen Anschluss 54 des Halbleiterschalters S₁ und einem ersten Eingang eines Operationsverstärkers 56a und die Widerstandskette 52b ist zwischen einem motorseitigen Anschluss 58 des Halbleiterschalters S₁ und einem zweiten Eingang des Operationsverstärkers 56a angeschlossen. Hierzu entsprechend ausgeführt ist die Widerstandskette 52c zwischen einem netzseitigen Anschluss 60 des Halbleiterschalters S₂ und einem ersten Eingang eines Operationsverstärkers 56b und die Widerstandskette 52b zwischen einem motorseitigen Anschluss 62 des Halbleiterschalters S₂ und einem zweiten Eingang des Operationsverstärkers 56b verschaltet.

Die Ausgänge der Operationsverstärker 56a, 56b sind jeweils an einen ersten Eingang eines zugeordneten Komparators 64a, 64b angeschlossen. An dem jeweils anderen Eingang des Komparators 64a beziehungsweise 64b ist eine Referenzspannung U_{ref} angelegt, die an einem jeweiligen Spannungsteiler 66a, 66b abgegriffen wird. Wie in der Figur 5 vergleichsweise deutlich ersichtlich, ist der Spannungsteiler 66b der Auswerteschaltung 44b invertiert an den Komperator 64b angeschlossen. Das bedeutet, dass der Komperator 64b im Vergleich zu dem Komperator 64a ein invertiertes Ausgangssignal generiert.

Das Ausgangs- oder Auswertesignal B des Komparators 64a wird an die Steuereinheit 28 versendet. Das entsprechende Ausgangssignal des Komparators 64b wird als das Auswertesignal C an die Steuereinheit 28 versendet.

Anhand der zwei Ausgangssignale B und C ist die Steuereinheit 28 zur sicheren Erfassung des Schaltzustands der Verbindungs- und Trennschaltung 22 eingerichtet.

Zur Erfassung des Lade- oder Entladezustands des Zwischenkreises 16 ist es beispielsweise zusätzlich denkbar, dass weitere Auswerteschaltungen in die Schaltungsanordnung 24 verschalten sind. So ist in einer möglichen Ausführungsform beispielsweise eine weitere Auswerteschaltung zur Überwachung des Schaltzustandes des Halbleiterschalter S₄ vorgesehen. Hierzu ist die entsprechende Auswerteschaltung zwischen den kollektorseitigen Anschluss 68 einerseits und den emitterseitigen Anschluss 70 des Halbleiterschalters S₄ andererseits verschaltet.

Des Weiteren ist es zusätzlich oder alternativ ebenso denkbar, eine Auswerteschaltung für den Halbleiterschalter S₃ des Verbindungspfades 26 vorzusehen. Die entsprechende Auswerteschaltung ist beispielsweise zwischen dem Anschluss 70 und dem Anschluss 62 verschaltet. Dadurch werden im Betrieb neben den Auswertesignalen B und C zwei zusätzliche Auswertesignale generiert. Durch die vier Auswertesignale ist mit der Steuereinheit 28 eine besonders sichere Überwachung der Verbindungs- und Trennschaltung 22 möglich.

In einer weiteren denkbaren Ausgestaltungsform ist die Schaltungsanordnung 24 schaltungstechnisch mit einer redundant ausgeführten zweikanaligen Abschaltung zur Unterbrechung des Zwischenkreises 16 ausgeführt. Das bedeutet, dass zur Abschaltung beziehungsweise Unterbrechung des Zwischenkreises 16 insgesamt vier Abschaltkanäle vorgesehen sind. Mit anderen Worten sind jeweils zwei Schaltelemente seriell in den Pluspfad 18 beziehungsweise in dem Minuspfad 20 verschaltet, wobei jeweils ein Schaltelement im Pluspfad 18 und ein Schaltelement im Minuspfad 20 ein gemeinsames Schaltelementpaar bilden, welches entsprechend zu den voranstehend beschriebenen Schaltelementen S₁ und S₂ zusammenwirkt.

Dadurch ist es beispielsweise möglich im Betrieb des Antriebssystems 2 die Abschaltpfade regelmäßig auf Fehler zu testen, da die Ausfallwahrscheinlichkeit der beteiligten Schaltelemente nicht Null ist. Zu diesem Zwecke wird die die Funktionstüchtigkeit der Schaltelemente bei jedem Wechsel der Ansteuersignale A₁ und A₂ anhand der Auswertesignale B und C überprüft. Dadurch ist eine besonders betriebssichere und zuverlässige Unterbrechung des Zwischenkreises 16 sichergestellt, da einerseits der Zwischenkreis 16 mittels zweier separater Schaltelemente zweikanalig unterbrochen wird und andererseits diese zweikanalige Unterbrechung redundant ausgeführt ist.

### Bezugszeichenliste

- 2: Antriebssystem
- 4: Elektromotor
- 6: Umrichter
- 8: Motorstromrichter
- 10: Motorsteuerung
- 12: Versorgungsnetz
- 14: Gleichrichter
- 16: Zwischenkreis/Gleichstromzwischenkreis
- 18: Pluspfad
- 20: Minuspfad
- 22: Verbindungs- und Trennschaltung
- 24: Schaltungsanordnung
- 26: Verbindungspfad
- 28: Steuereinheit
- 30: Entladewiderstand
- 32: Ladewiderstand
- 34, 36, 38, 40: Treiber
- 42: Mikrocontroller/Logik
- 44a, 44b: Auswerteschaltung
- 46: Busleitung
- 48: Schutzschalter
- 50: Schutzimpendanzwiderstand
- 52a, 52b, 52c, 52d: Widerstandskette
- 54: Anschluss
- 56a, 56b: Operationsverstärker
- 58, 60, 62: Anschluss
- 64a, 64b: Komparator
- 66a, 66b: Spannungsteiler
- 68, 70: Anschluss

- U_{ZK}: Zwischenkreisspannung
- S₁, S₂, S₃, S₄: Schaltelement/Halbleiterschalter/Schutzschalter
- A, A₁, A₂: Abschaltsignal
- A₃: Schaltsignal
- U₁, U₂: Spannungssignal
- U_{ref}: Referenzspannung
- R: Rückmeldesignal
- B, C: Auswertesignal/Ausgangssignal

## Patentansprüche

1. Verfahren zum sicheren Abschalten eines Antriebssystems (2) mit einem an einem Versorgungsnetz (12) angeschlossenen Umrichter (6) mit einem Gleichstromzwischenkreis (16) zur Bereitstellung einer Zwischenkreisspannung (U_{ZK}) für eine Anzahl von Elektromotoren (4) mit jeweils einem an den Zwischenkreis (16) angeschlossenen Motorstromrichter (8), und mit einer in den Zwischenkreis (16) geschalteten Trennschaltung (22), der zur sicheren Unterbrechung des Zwischenkreises (16) von einer Steuereinheit (28) ein Abschaltsignal (A, A₁, A₂) zugeführt wird,
- wobei die Verbindungs- und Trennschaltung (22) einen ersten Halbleiterschalter (S₁) im Pluspfad (18) und einen zweiten Halbleiterschalter (S₂) im Minuspfad (20) des Zwischenkreises (16) aufweist, welche infolge des Abschaltsignals (A, A₁, A₂) abgeschaltet werden,
- **dadurch gekennzeichnet, daß** dem ersten Halbleiterschalter (S₁) und dem zweiten Halbleiterschalter (S₂) jeweils eine mit der Steuereinheit (28) gekoppelte Auswerteschaltung (44a, 44b) zur Erfassung eines Spannungswerts (U₁, U₂) im Zwischenkreis (16) zugeordnet wird,
- wobei die Auswerteschaltungen (44a, 44b) in Abhängigkeit eines Vergleichs des jeweiligen Spannungswerts (U₁, U₂) mit einer Referenzspannung (U_{ref}) ein das Abschaltsignal (A, A₁, A₂) auslösendes Ausgangssignal (B, C) an die Steuereinheit (28) versenden, und
- wobei der Zwischenkreis (16) zweikanalig getrennt wird.

2. Antriebssystem (2) mit einem an einem Versorgungsnetz (12) angeschlossenen Umrichter (6) mit einem Gleichstromzwischenkreis (16) zur Bereitstellung einer Zwischenkreisspannung (U_{ZK}) für eine Anzahl von Elektromotoren (4) mit jeweils einem an den Zwischenkreis (16) angeschlossenen Motorstromrichter (8), und mit einer in den Zwischenkreis (16) geschalteten Verbindungs- und Trennschaltung (22), die signaltechnisch mit einer Steuereinheit (28) verbunden ist, welche dazu eingerichtet ist, den Zwischenkreis (16) anhand eines Abschaltsignals (A, A₁, A₂) mittels der Verbindungs- und Trennschaltung (22) sicher zu unterbrechen,
- wobei die Verbindungs- und Trennschaltung (22) mindestens zwei Halbleiterschalter (S₁, S₂) zur Unterbrechung des Zwischenkreises (16) aufweist,
- wobei ein erster Halbleiterschalter (S₁) der Verbindungs- und Trennschaltung (22) im Pluspfad (18) des Zwischenkreises (16) verschaltet ist, und dass ein zweiter Halbleiterschalter (S₂) der Verbindungs- und Trennschaltung (22) im Minuspfad (20) des Zwischenkreises (16) verschaltet ist,
- **dadurch gekennzeichnet, daß** dem ersten Halbleiterschalter (S₁) und dem zweiten Halbleiterschalter (S₂) jeweils eine mit der Steuereinheit (28) gekoppelte Auswerteschaltung (44a, 44b) zur Erfassung eines Spannungswerts (U₁, U₂) im Zwischenkreis (16) zugeordnet ist, die in Abhängigkeit eines Vergleichs des jeweiligen Spannungswerts (U₁, U₂) mit einer Referenzspannung (U_{ref}) ein das Abschaltsignal (A, A₁, A₂) auslösendes Ausgangssignal (B, C) an die Steuereinheit (28) versendet.

3. Antriebssystem (2) nach Anspruch 2,
**dadurch gekennzeichnet,**
**dass** die Verbindungs- und Trennschaltung (22) einen Verbindungspfad (26), insbesondere zwischen dem Pluspfad (18) und dem Minuspfad (20) des Zwischenkreises (16), aufweist, in der ein Entladewiderstand (30) und ein hierzu in Reihe geschalteter dritter Halbleiterschalter (S₃) verschaltet sind.

4. Antriebssystem (2) nach Anspruch 2 oder 3,
**dadurch gekennzeichnet,**
**dass** die Auswerteschaltung (44a, 44b) durch Schutzimpendanzwiderstände (50) gebildete Widerstandsketten (52a, 52b, 52c, 52d) zur Erfassung des jeweiligen Spannungswerts (U₁, U₂) aufweist.

5. Antriebssystem (2) nach Anspruch 4,
**dadurch gekennzeichnet,**
**dass** die Schutzimpendanzwiderstände (50) insbesondere MELF-Widerstände sind.

6. Antriebssystem (2) nach einem der Ansprüche 2 bis 5,
**dadurch gekennzeichnet,**
**dass** die Verbindungs- und Trennschaltung (22) in einem Gehäuse eines netzseitigen Gleichrichters (14) des Umrichters (6) integriert ist.

## Claims

1. Method for reliably deactivating a drive system (2) having a converter (6), which is connected to a supply system (12) and comprises a DC intermediate circuit (16) for providing an intermediate circuit voltage (U_{ZK}) for a number of electric motors (4) each having a motor power converter (8) connected to the intermediate circuit (16), and having a disconnecting circuit (22), which is connected into the intermediate circuit (16) and which is fed with a deactivation signal (A, A₁, A₂) by a control unit (28) for reliably interrupting the intermediate circuit (16),
- wherein the connecting and disconnecting circuit (22) has a first semiconductor switch (S₁) in the positive path (18) and a second semiconductor switch (S₂) in the negative path (20) of the intermediate circuit (16), which semiconductor switches are deactivated as a result of the deactivation signal (A, A₁, A₂),
- **characterized in that** a respective evaluation circuit (44a, 44b), which is coupled to the control unit (28), for detecting a voltage value (U₁, U₂) in the intermediate circuit (16) is associated with the first semiconductor switch (S₁) and the second semiconductor switch (S₂),
- wherein the evaluation circuits (44a, 44b) transmit an output signal (B, C), which triggers the deactivation signal (A, A₁, A₂), to the control unit (28) depending on a comparison of the respective voltage value (U₁, U₂) with a reference voltage (U_{ref}), and
- wherein the intermediate circuit (16) is disconnected in a two-channel manner.

2. Drive system (2) having a converter (6), which is connected to a supply system (12) and comprises a DC intermediate circuit (16) for providing an intermediate circuit voltage (U_{ZK}) for a number of electric motors (4) each having a motor power converter (8) connected to the intermediate circuit (16), and having a connecting and disconnecting circuit (22), which is connected into the intermediate circuit (16) and which is connected in terms of signalling to a control unit (28), which is configured to reliably interrupt the intermediate circuit (16) based on a deactivation signal (A, A₁, A₂) by means of the connecting and disconnecting circuit (22),
- wherein the connecting and disconnecting circuit (22) has at least two semiconductor switches (S₁, S₂) for interrupting the intermediate circuit (16),
- wherein a first semiconductor switch (S₁) of the connecting and disconnecting circuit (22) is interconnected in the positive path (18) of the intermediate circuit (16) and a second semiconductor switch (S₂) of the connecting and disconnecting circuit (22) is interconnected in the negative path (20) of the intermediate circuit (16),
- **characterized in that** a respective evaluation circuit (44a, 44b), which is coupled to the control unit (28), for detecting a voltage value (U₁, U₂) in the intermediate circuit (16) is associated with the first semiconductor switch (S₁) and the second semiconductor switch (S₂), said evaluation circuit transmitting an output signal (B, C), which triggers the deactivation signal (A, A₁, A₂), to the control unit (28) depending on a comparison of the respective voltage value (U₁, U₂) with a reference voltage (U_{ref}).

3. Drive system (2) according to Claim 2,
**characterized in that**
the connecting and disconnecting circuit (22) has a connecting path (26), in particular between the positive path (18) and the negative path (20) of the intermediate circuit (16), in which connecting path a discharge resistor (30) and a third semiconductor switch (S₃) connected in series therewith are interconnected.

4. Drive system (2) according to Claim 2 or 3,
**characterized in that**
the evaluation circuit (44a, 44b) has resistor chains (52a, 52b, 52c, 52d), which are formed by protective impedance resistors (50), for detecting the respective voltage value (U₁, U₂).

5. Drive system (2) according to Claim 4,
**characterized in that**
the protective impedance resistors (50) are, in particular, MELF resistors.

6. Drive system (2) according to one of Claims 2 to 5,
**characterized in that**
the connecting and disconnecting circuit (22) is integrated in a housing of a system-side rectifier (14) of the converter (6).

## Revendications

1. Procédé d'arrêt sécurisé d'un système d'entraînement (2) comportant un convertisseur (6) connecté à un réseau d'alimentation (12) et un circuit intermédiaire à courant continu (16) pour fournir une tension de circuit intermédiaire (U_{ZK}) à une pluralité de moteurs électriques (4) respectivement munis d'un convertisseur de courant moteur (8) raccordé au circuit intermédiaire (16), et comportant un circuit de séparation (22) raccordé dans le circuit intermédiaire (16), auquel un signal d'arrêt (A, A₁, A₂) est délivré par une unité de commande (28) pour interrompre de manière sécurisée le circuit intermédiaire (16),
- dans lequel le circuit de connexion et de séparation (22) comporte un premier commutateur à semi-conducteur (S₁) sur le trajet positif (18) et un deuxième commutateur à semi-conducteur (S₂) sur le trajet négatif (20) du circuit intermédiaire (16), qui sont ouverts du fait du signal d'arrêt (A, A₁, A₂),
- **caractérisé en ce qu'**un circuit d'évaluation (44a, 44b) couplé à l'unité de commande (28) est associé au premier commutateur à semi-conducteur (S₁) et au deuxième commutateur à semi-conducteur (S₂) pour détecter une valeur de tension (U₁, U₂) dans le circuit intermédiaire (16),
- dans lequel les circuits d'évaluation (44a, 44b) envoient à l'unité de commande (28) un signal de sortie (B, C) qui déclenche le signal d'arrêt (A, A₁, A₂) en fonction d'une comparaison entre la tension respective (U₁, U₂) et une tension de référence (U_{ref}), et
- dans lequel le circuit intermédiaire (16) est séparé en deux canaux.

2. Système d'entraînement (2) comportant un convertisseur (6) raccordé à un réseau d'alimentation (12) muni d'un circuit intermédiaire à courant continu (16) pour fournir une tension de circuit intermédiaire (U_{ZK}) à une pluralité de moteurs électriques (4) respectivement munis d'un convertisseur de courant moteur (8) raccordé au circuit intermédiaire (16), et comportant un circuit de connexion et de séparation (22) connecté dans le circuit intermédiaire (16), qui est relié par signal à une unité de commande (28), laquelle est conçue pour interrompre de manière sécurisée le circuit intermédiaire (16) sur la base du signal d'arrêt (A, A₁, A₂) au moyen du circuit de connexion et de séparation (22),
- dans lequel le circuit de connexion et de séparation (22) comporte au moins deux commutateurs à semi-conducteur (S₁, S₂) pour interrompre le circuit intermédiaire (16),
- dans lequel un premier commutateur à semi-conducteur (S₁) du circuit de connexion et de séparation (22) est connecté sur le trajet positif (18) du circuit intermédiaire (16), et en ce qu'un deuxième commutateur à semi-conducteur (S₂) du circuit de connexion et de séparation (22) est connecté sur le trajet négatif (20) du circuit intermédiaire (16),
- **caractérisé en ce qu'**un circuit d'évaluation (44a, 44b) couplé à l'unité de commande (28) est respectivement associé au premier commutateur à semi-conducteur (S₁) et au deuxième commutateur à semi-conducteur (S₂) pour détecter une valeur de tension (U₁, U₂) dans le circuit intermédiaire (16), lequel circuit d'évaluation envoie à l'unité de commande (28) un signal de sortie (B, C) déclenchant le signal d'arrêt (A, A₁, A₂) en fonction d'une comparaison entre la valeur de tension respective (U₁, U₂) et une tension de référence (U_{ref}) .

3. Système d'entraînement (2) selon la revendication 2, **caractérisé en ce que** le circuit de connexion et de séparation (22) comporte un trajet de connexion (26), notamment entre le trajet positif (18) et le trajet négatif (20) du circuit intermédiaire (16), dans lequel sont connectés une résistance de décharge (30) et un troisième commutateur à semi-conducteur (S₃) connecté en série.

4. Système d'entraînement (2) selon la revendication 2 ou 3, **caractérisé en ce que** le circuit d'évaluation (44a, 44b) comporte des chaînes de résistances (52a, 52b, 52c, 52d) formées de résistances d'impédance de protection (50) pour détecter la valeur de tension (U₁, U₂) respective.

5. Système de commande (2) selon la revendication 4, **caractérisé en ce que** les résistances d'impédance de protection (50) sont notamment des résistances MELF.

6. Système d'entraînement (2) selon l'une des revendications 2 à 5, **caractérisé en ce que** le circuit de connexion et de séparation (22) est intégré dans un boîtier d'un redresseur (14) sur le côté réseau du convertisseur (6).
